# EUROPÄISCHE PATENTSCHRIFT

(11) **EP 0 991 497 B1**
(45) Veröffentlichungstag und Bekanntmachung des Hinweises auf die Patenterteilung: **18.09.2002**
(21) Anmeldenummer: 99917892.4
(22) Anmeldetag: 25.03.1999
(51) Int. Cl.: B24B 19/12, B24B 1/00, B23Q 1/54

(54) **VERFAHREN UND VORRICHTUNG ZUR SPANENDEN BEARBEITUNG UNRUNDER INNEN- UND AUSSENKONTUREN**
METHOD AND DEVICE FOR MACHINING OUT OF ROUND INNER AND OUTER CONTOURS
PROCEDE ET DISPOSITIF PERMETTANT DE PRODUIRE PAR USINAGE DES CONTOURS INTERNES ET EXTERNES EN FAUX-ROND

(30) Priorität: 25.03.1998 DE 19813165
(43) Veröffentlichungstag der Anmeldung: 12.04.2000
(73) Patentinhaber: REINECKER KOPP Werkzeugmaschinen GmbH, 89231 Neu-Ulm (DE)
(72) Erfinder: KLICPERA, Udo, D-87459 Pfronten (DE)
(74) Vertreter: Leson, Thomas Johannes Alois, Dipl.-Ing.
(86) Internationale Anmeldenummer: EP9902112
(87) Internationale Veröffentlichungsnummer: WO99048644

(56) Entgegenhaltungen:
- DE-A- 19 620 813

## Beschreibung

Die Erfindung betrifft ein Verfahren und eine Vorrichtung zur spanenden Bearbeitung unrunder Innen- und Außenkonturen wie zum Beispiel Nockenformen.

Es sind gattungsgemäße Verfahren bekannt, bei denen eine kegelförmige Schleifscheibe zum Einsatz kommt, die von einer Spindel getragen wird, die in einem bestimmten Winkel zum Werkstück ausgerichtet ist. Diese Vorgehensweise hat den Vorteil, daß insbesondere bei langen Werkstücken wie Nockenwellen die Schleifspindel kurz und damit steif ausgeführt werden kann. Kommt eine kegelförmige oder kegelstumpfförmige Schleifscheibe zum Einsatz, muß jedoch gewährleistet werden, daß die Mantellinie der Schleiffläche der Schleifscheibe, die in das Werkstück eingreift, parallel zur gewünschten Fläche ist, da anderenfalls die gewünschte Fläche nicht erzeugt werden kann, sondern es vielmehr zu einer Verzerrung der Fläche kommt.

Bei rotationssymetrischen (runden), zu schleifenden Flächen stellt dies kein Problem dar, da die Schleifscheibe lediglich entsprechend zum Werkstück ausgerichtet werden muß. Bei nicht rotationssymetrischen (unrunden) Flächen ist dies jedoch mit einer feststehenden Ausrichtung von Schleifscheibe zu Werkstück nicht möglich.

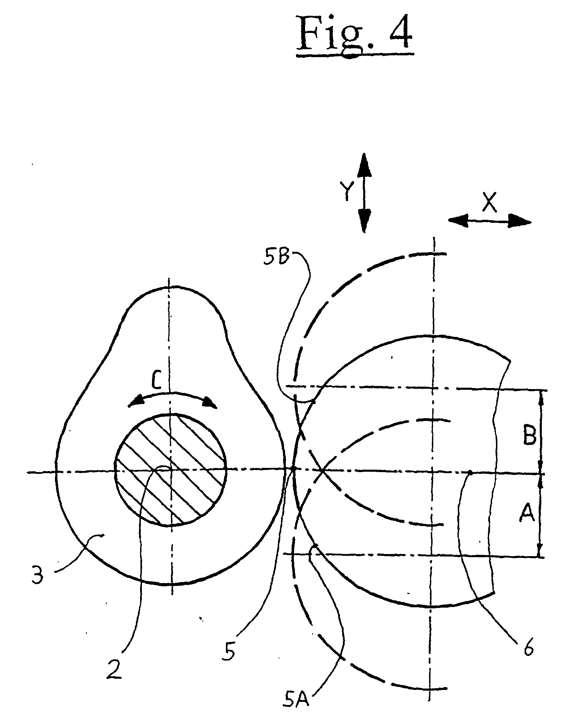

Aus der DE 196 20 813 A1 sowie der WO 97/4415 ist daher ein Verfahren zum Schleifen von Nocken bekannt, bei dem die kegelförmige Schleifscheibe auf einer Y-Achse gegenüber dem Werkstück auf- und abbewegt wird, um eine entsprechende Ausrichtung zum Werkstück zu gewährleisten. Hierzu wird auf die Figur 4 verwiesen, die den genannten Dokumenten entnommen ist.

Bei Bearbeitung des gezeigten Nockens würde bei fester Ausrichtung der Schleifscheibe gemäß der durchgezogenen Linie aufgrund der unrunden Nockenkontur die Schleifzone an der Schleifscheibe zwischen den Punkten A und B wandern. Da die Mantellinie der Schleiffläche an den Punkten ober- und unterhalb der Achse, also auch an den Punkten A und B nicht parallel zu der gewünschten Fläche ist, würde es in diesem Bereich zu einer unerwünschten Verzerrung der geschliffenen Fläche kommen.

Um diese Verzerrung zu vermeiden, wird gemäß den genannten Dokumenten die Schleifscheibe entlang der Y-Achse beispielsweise in die gestrichelt dargestellte Position bewegt. Wenngleich hierdurch eine Verzerrung zuverlässig vermieden werden kann, hat es sich gezeigt, daß bei bestimmten Konturen auf diese Weise kein befriedigendes Schleifergebnis erzielt werden kann.

Der Erfindung liegt die Aufgabe zugrunde, ein Verfahren sowie eine Vorrichtung zur spanenden Bearbeitung von unrunden Innen- und Außenkonturen zu schaffen, das eine hohe Bearbeitungsqualität gewährleistet.

Diese Aufgabe wird durch die Merkmale der Ansprüche 1 und 2 bzw. 13 und 14 gelöst.

Der Erfindung liegt die Idee zugrunde, durch eine kontinuierliche Relativbewegung zwischen Werkzeug und Werkstück die Aufgabe zu lösen und ein zufriedenstellendes Bearbeitungsergebnis zu erzielen. Dabei wurde von den Erfindern herausgefunden, daß mit Hilfe einer Schwenkbewegung ein optimales Ergebnis zu erzielen ist, da dieses Schwenken des Werkzeugs oder Werkstücks eine taumelnde Bewegung ergibt, was zu einem Bearbeitungsergebnis hoher Qualität führt, da keinerlei Bearbeitungsmarken entstehen. Weiterhin kann bei bestimmten Bearbeitungsaufgaben auf diese Weise eine wesentlich günstigere Maschinendynamik erzielt werden und eine günstigere Beschleunigung des Werkzeugs gegenüber dem Werkstück erzielt werden.

Mit der Erfindung wird ein Verfahren zur spanenden Bearbeitung von unrunden Konturen wie Nocken geschaffen, bei dem ein kegel- oder kegelstumpfförmiges Werkzeug beispielsweise eine Schleifscheibe zum Einsatz kommt, das zur Rotation auf einer Spindel gelagert ist, die in einem bestimmten Winkel zu der Werkstückachse angeordnet ist, auf der das die Kontur aufweisende Werkstück gelagert ist, wobei das Werkzeug während der Bearbeitung um zumindest eine von der Spindelachse abweichende erste Schwenkachse verschwenkt wird.

Da es selbstverständlich nur auf die Relativbewegung zwischen Werkzeug und Werkstück ankommt, kann alternativ entsprechend das Werkstück bewegt werden. Hierzu wird während der Bearbeitung das Werkzeug um zumindest eine von der Werkstückachse abweichende erste Schwenkachse verschwenkt.

Bevorzugt ist die erste Schwenkachse parallel zur Spindelachse oder zur Werkstückachse in einem bestimmten Abstand von dieser angeordnet. Weiterhin können gute Bearbeitungsergebnisse erzielt werden, wenn das Werkzeug oder das Werkstück während der Bearbeitung zusätzlich um eine zweite Schwenkachse verschwenkt wird. Auch hierbei kommt es natürlich lediglich auf die Relativbewegung zwischen Werkzeug und Werkstück an, so daß es auch möglich ist, das Werkzeug um eine Achse und das Werkstück um eine andere Achse zu verschwenken.

Grundsätzlich sind unterschiedlichste Orientierungen der Schwenkachsen denkbar, um den gewünschten Effekt zu erzielen und die Eingriffslinie des Werkzeuges parallel zur gewünschten Fläche zu halten. Bewährt hat sich eine Orientierung der ersten Schwenkachse senkrecht zu der Spindelachse oder der Werkstückachse, wobei die zweite Schwenkachse senkrecht zu der Spindelachse oder Werkstückachse und weiterhin zu der ersten Schwenkachse steht.

Vorteilhaft liegt die erste Schwenkachse im Bereich des Werkzeugs oder der zu bearbeitenden Kontur. Bewährt hat sich weiterhin eine Anordnung der zweiten Schwenkachse vom Werkstück aus gesehen auf der Spindelachse hinter der ersten Schwenkachse.

Zur Erhöhung der Bearbeitungsmöglichkeiten kann das Werkzeug entlang der Spindelachse verschiebbar beispielsweise in einer Linearlagerung gelagert sein. Zur Einstellung der Maschine auf die konkrete Bearbeitungsaufgabe bzw. das verwendete Werkzeug beispielsweise den Kegelwinkel einer kegelförmigen Schleifscheibe kann der Winkel der Spindelachse gegenüber der Werkzeugachse einstellbar sein.

Als vorteilhaft hat es sich erwiesen, wenn das Werkstück in einer Aufspannung mit mindestens zwei Werkzeugen bearbeitet werden kann. So kann beispielsweise beim Schleifen einer Nockenwelle mit einer Schleifscheibe relativ großen Durchmessers vorgeschliffen werden und anschließend mit einer Schleifscheibe kleineren Durchmessers fertig geschliffen werden. Hierzu kann der Spindelstock zur Lagerung der Spindel verschwenkbar sein, um den Eingriff eines weiteren am Spindelstock gelagerten Werkzeugs mit dem Werkstück zu ermöglichen.

Beispielsweise bei Nockenwellen können schräge oder ballige Konturen der Nocken erwünscht sein. Um diese zu erzielen, kann das Werkzeug mit einer solchen Mantellinie versehen sein. Ggf. kann das Werkzeug beispielsweise eine Schleifscheibe entsprechend abgerichtet werden.

Die Erfindung wird folgend anhand zweier Ausführungsbeispiele näher erläutert.

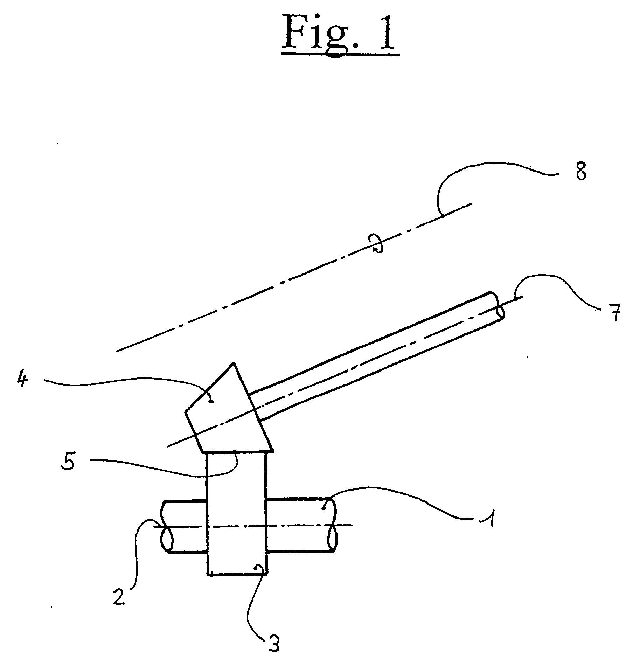

Figur 1 zeigt ein erstes Ausführungsbeispiel der Erfindung.

Figur 2 zeigt ein zweites Ausführungsbeispiel der Erfindung.

Figur 3 zeigt eine kegelstumpfförmige Schleifscheibe im Eingriff mit einem Nocken einer Nockenwelle.

Figur 4 zeigt einen Schnitt durch Nocken und kegelstumpfförmige Schleifscheibe.

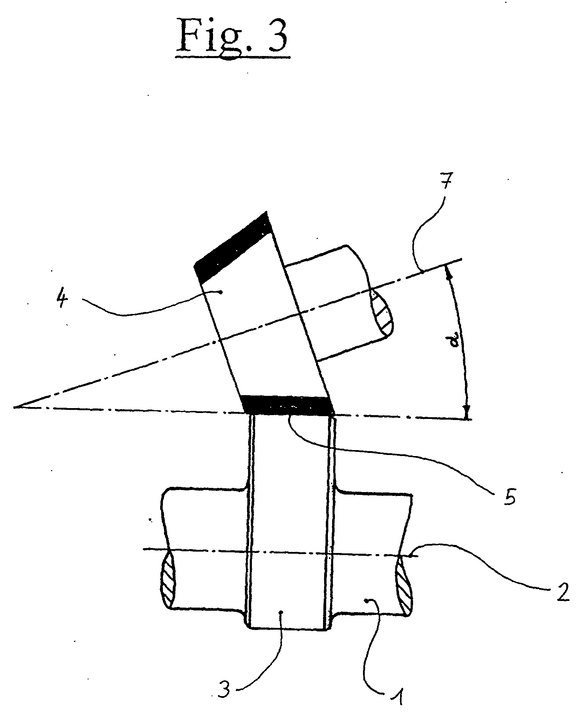

Zunächst wird Bezug genommen auf die Figuren 3 und 4, die die grundsätzliche Bearbeitungssituation, hier anhand einer Nockenwelle, zeigt, deren Nocken mittels einer kegelstumpfförmigen Schleifscheibe geschliffen werden. Die Nockenwelle 1 ist auf einer Werkstückachse 2 gelagert und verfügt über einen Nocken 3, der mittels der dargestellten Schleifscheibe 4 geschliffen werden soll. Um die gewünschte Nockenkontur zu erhalten - in diesem Fall soll die Nockenfläche im Schnitt parallel zur Werkstückachse 2 sein - muß die Eingriffslinie 5 der Mantelfläche der Schleifscheibe 4 parallel zur Werkstückachse 2 ausgerichtet sein. Diese Ausrichtung wird durch Neigung der Spindelachse 7 der Schleifscheibe 4 um den Winkel α gewährleistet. In Figur 3 ist eine Ausrichtung der Schleifscheibe 4 gezeigt, die einen verzerrungsfreien Schliff des oberen Nockenbereichs gewährleistet, jedoch in dieser Ausrichtung nicht in der Lage ist, den unteren Bereich verzerrungsfrei zu schleifen, was folgend erläutert wird. Der Nocken 3 weist eine unrunde Gestalt auf, wie gut aus Figur 4 zu ersehen ist. Im unteren konzentrischen Bereich des Nockens 3 wird beim Schleifvorgang die Eingriffslinie 5 auf der Achse 6 erhalten bleiben. Wird jedoch der obere unrunde bzw. nicht konzentrische Abschnitt des Nockens 3 geschliffen, wandert die Eingriffslinie bei unveränderter Ausrichtung der Schleifscheibe 4 zunächst um den Betrag B nach oben zur Lage 5B und anschließend nach unten um den Betrag A unterhalb der Achse 6 zur Lage 5A. In den Lagen 5A und 5B ist jedoch die Eingriffslinie 5 der kegelstumpfförmigen Schleifscheibe 4 nicht parallel zur gewünschten Nockenfläche und es kommt zu einer Winkelabweichung bzw. einer Verzerrung der Nockenfläche. Diese Verzerrung nimmt mit steigendem Kegelwinkel der Schleifscheibe 4 zu.

Um dieses Problem zu lösen, wurde gemäß der DE 196 20 813 A1 sowie der WO 97/4415 vorgeschlagen, die Schleifscheibe 4 so entlang der Y-Achse zwischen den Umkehrpunkten in den Lagen 5A und 5B zu bewegen, daß die Eingriffslinie 5 immer auf der Achse 6 liegt.

Gemäß der Erfindung wird die Schleifscheibe 4 bzw. die Spindelachse 7 während des Schleifvorgangs in Abhängigkeit von der Winkelstellung der Nockenwelle 1 um eine erste Schwenkachse 8 geschwenkt. Durch entsprechendes Schwenken der Spindelachse 7 kann die Eingriffslinie 5 der Schleifscheibe 4 beispielsweise immer parallel zur Werkstückachse 2 gehalten werden. Selbstverständlich kann durch eine entsprechende Verschwenkung auch bewußt eine nicht parallele Ausrichtung erreicht werden, um beispielsweise einen schrägen Schliff der Nockenfläche ggf. bereichsweise zu erzielen.

Gemäß dem zweiten Ausführungsbeispiel wird dies durch eine Verschwenkung der Spindelachse 7 um zwei Achsen erreicht, wobei die erste Schwenkachse 9 senkrecht auf der Spindelachse 7 steht und die zweite Schwenkachse 10 senkrecht zur Spindelachse 7 und weiterhin senkrecht auf der ersten Schwenkachse 9. Wie dargestellt, ist die zweite Schwenkachse 10 in einem bestimmten Abstand von den anderen Achsen angeordnet.

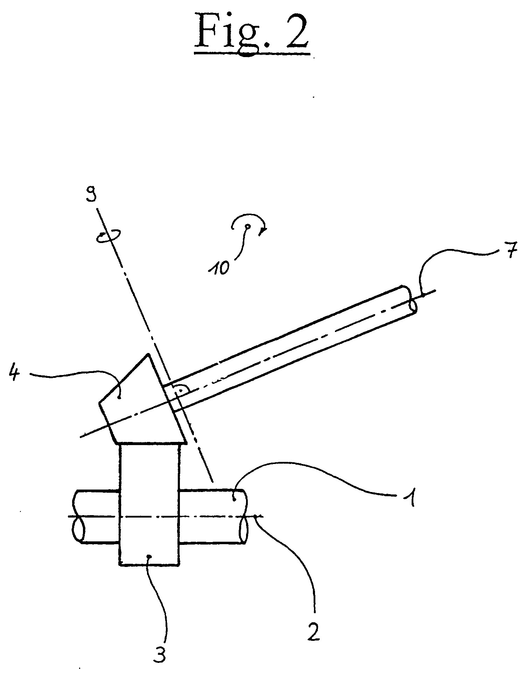

Im allgemeinen ist es vorteilhaft, wenn bei einer Auslegung gemäß Figur 2 die erste Schwenkachse 9 im Bereich der zu bearbeitenden Fläche oder des Werkzeugs liegt. Die optimale Auslegung der Schwenkachse ist von der Bearbeitungsaufgabe und dem Bearbeitungswerkzeug abhängig. Durch die Wahl der Achsen ergibt sich je nach Bearbeitungsaufgabe eine bestimmte Relativbewegung zwischen Werkstück und Werkzeug und hieraus eine bestimmte Maschinendynamik. Da grundsätzlich ein möglichst kontinuierlicher Bearbeitungsvorgang ohne größere Beschleunigung des Werkzeugs gegenüber dem Werkstück angestrebt wird, ist die optimale Wahl der Schwenkachse bzw. der Schwenkachsen von der Bearbeitungsaufgabe abhängig. Eine entsprechende Optimierung anhand von Bewegungsgleichungen gehört jedoch zum Handwerkszeug des zuständigen Fachmanns und muß nicht näher erläutert werden.

Bei den beschriebenen Ausführungsbeispielen wird die Schleifscheibe gegenüber dem Werkstück bewegt. Da es lediglich auf die Relativbewegung zwischen Werkzeug und Werkstück ankommt, kann genauso gut das Werkstück gegenüber dem Werkzeug bewegt werden oder beide Elemente können so bewegt werden, daß sich eine entsprechende Relativbewegung einstellt.

## Patentansprüche

1. Verfahren zur spanenden Bearbeitung von unrunden Konturen unter Verwendung eines kegel- oder kegelstumpfförmigen Werkzeugs (4), das zur Rotation auf einer Spindel gelagert ist, die in einem bestimmten Winkel zu der Werkstückachse (2) angeordnet ist, auf der das die Kontur aufweisende Werkstück (1) gelagert ist, **dadurch gekennzeichnet, daß** das Werkzeug (4) während der Bearbeitung um zumindest eine von der Spindelachse (7) abweichende erste Schwenkachse (8, 9) verschwenkt wird.

2. Verfahren zur spanenden Bearbeitung von unrunden Konturen unter Verwendung eines kegel- oder kegelstumpfförmigen Werkzeugs(4), das zur Rotation auf einer Spindel gelagert ist, die in einem bestimmten Winkel zu der Werkstückachse (2) angeordnet ist, auf der das die Kontur aufweisende Werkstück (1) gelagert ist, **dadurch gekennzeichnet, daß** das Werkstück (1) während der Bearbeitung um zumindest eine von der Werksstückachse (2) abweichende erste Schwenkachse verschwenkt wird.

3. Verfahren nach Anspruch 1 oder 2, **dadurch gekennzeichnet, daß** die erste Schwenkachse (8) parallel zur Spindelachse (7) oder zur Werkstückachse (2) in einem bestimmten Abstand von dieser angeordnet ist.

4. Verfahren nach Anspruch 1 oder 2, **dadurch gekennzeichnet, daß** das Werkzeug (4) oder das Werkstück (1) während der Bearbeitung zusätzlich um eine zweite Schwenkachse (10) verschwenkt wird.

5. Verfahren nach Anspruch 3, **dadurch gekennzeichnet, daß** die erste Schwenkachse (9) senkrecht zu der Spindelachse (7) oder der Werkstückachse (2) steht und die zweite Schwenkachse (10) senkrecht zu der Spindelachse (7) oder Werkstückachse (2) und der ersten Schwenkachse (9) steht.

6. Verfahren nach einem der Ansprüche 3 bis 5, **dadurch gekennzeichnet, daß** die erste Schwenkachse (9) im Bereich des Werkzeugs (4) oder der zu bearbeitenden Kontur verläuft.

7. Verfahren nach einem der Ansprüche 3 bis 6, **dadurch gekennzeichnet, daß** die zweite Schwenkachse (10) vom Werkstück (1) aus gesehen auf der Spindelachse (7) hinter der ersten Schwenkachse (9) angeordnet ist.

8. Verfahren nach einem der Ansprüche 1 bis 7, **dadurch gekennzeichnet, daß** das Werkzeug (4) entlang der Spindelachse (7) verschiebbar ist.

9. Verfahren nach einem der Ansprüche 1 bis 8, **dadurch gekennzeichnet, daß** der Winkel der Spindelachse (7) gegenüber der Werkstückachse (2) einstellbar ist.

10. Verfahren nach einem der Ansprüche 1 bis 9, **dadurch gekennzeichnet, daß** der Spindelstock zur Lagerung der Spindel verschwenkbar ist, um den Eingriff eines weiteren am Spindelstock gelagerten Werkzeugs (4) mit dem Werkstück (1) zu ermöglichen.

11. Verfahren nach einem der Ansprüche 1 bis 10, **dadurch gekennzeichnet, daß** das Werkzeug (4) zur Erzielung einer schrägen oder balligen Kontur mit einer solchen Mantellinie versehen wird.

12. Verfahren nach einem der Ansprüche 1 bis 11, **dadurch gekennzeichnet, daß** zur Bearbeitung einer Nockenwelle zumindest eine Schleifscheibe als Werkzeug (4) eingesetzt wird.

13. Vorrichtung zur Durchführung des Verfahrens nach einem der Ansprüche 1 bis 12, mit einer Werkstücklagerung sowie einem Spindelstock zur Lagerung eines Werkzeugs (4), **dadurch gekennzeichnet, daß** der Spindelstock während der Bearbeitung um eine erste Schwenkachse (8, 9) schwenkbar ist, die nicht der Spindelachse (7) entspricht.

14. Vorrichtung zur Durchführung des Verfahrens nach einem der Ansprüche 1 bis 12, mit einer Werkstücklagerung sowie einem Spindelstock zur Lagerung eines Werkzeugs (4), **dadurch gekennzeichnet, daß** das Werkstück (1) während der Bearbeitung um eine erste Schwenkachse (8, 9) schwenkbar ist, die nicht der Werkstückachse (2) entspricht.

15. Vorrichtung nach Anspruch 13 oder 14, **dadurch gekennzeichnet, daß** die erste Schwenkachse (8) parallel zur Spindelachse (7) oder zur Werkstückachse (2) in einem bestimmten Abstand zu dieser angeordnet ist.

16. Vorrichtung nach einem der Ansprüche 13 bis 15, **dadurch gekennzeichnet, daß** eine zweite Schwenkachse (10) vorgesehen ist, um die das Werkzeug (4) oder das Werkstück (1) während der Bearbeitung schwenkbar ist.

17. Vorrichtung nach Anspruch 16, **dadurch gekennzeichnet, daß** die erste Schwenkachse (9) senkrecht zur Spindelachse (7) oder der Werkstückachse (2) vorgesehen ist und die zweite Schwenkachse (10) senkrecht zu der Spindelachse (7) oder Werkstückachse (2) und der ersten Schwenkachse.

18. Vorrichtung nach Anspruch 16 oder 17, **dadurch gekennzeichnet, daß** die erste Schwenkachse (9) im Bereich des Werkzeugs (4) oder der zu bearbeitenden Kontur vorgesehen ist.

19. Vorrichtung nach einem der Ansprüche 13 bis 18, **dadurch gekennzeichnet, daß** die zweite Schwenkachse (10) vom Werkstück (1) aus gesehen auf der Spindelachse (7) hinter der ersten Schwenkachse (9) angeordnet ist.

20. Vorrichtung nach einem der Ansprüche 13 bis 19, **gekennzeichnet durch** eine Linearlagerung, in der das Werkzeug (4) entlang der Spindelachse (7) verschiebbar ist.

21. Vorrichtung nach einem der Ansprüche 13 bis 20, **gekennzeichnet durch** eine Einstelleinrichtung, mit der der Winkel der Spindelachse (7) gegenüber der Werkzeugachse (2) einstellbar ist.

22. Vorrichtung nach einem der Ansprüche 13 bis 21, **dadurch gekennzeichnet, daß** der Spindelstock zur Lagerung der Spindel verschwenkbar ist, um den Eingriff eines weiteren am Spindelstock gelagerten Werkzeugs (4) mit dem Werkstück (1) zu ermöglichen.

23. Vorrichtung nach Anspruch 22, **dadurch gekennzeichnet, daß** der Spindelstock die Aufnahme eines Werkzeugs (4) großen Durchmessers zur Vorbearbeitung und die Aufnahme eines Werkzeugs (4) kleinen Durchmessers zur Nachbearbeitung zuläßt.

24. Vorrichtung nach einem der Ansprüche 13 bis 23, **dadurch gekennzeichnet, daß** die Vorrichtung zum Schleifen von Nockenwellen mit Schleifscheiben als Werkzeug (4) aufrüstbar ist.

## Claims

1. Method for machining out-of-round contours using a tool (4) in the shape of a cone or truncated cone mounted for rotation on a spindle which is arranged at a defined angle to the workpiece axis (2) on which the workpiece (1) possessing the contour is mounted, **characterized in that** during machining the tool (4) is swept about at least one first sweep axis (8, 9) that differs from the spindle axis (7).

2. Method for machining out-of-round contours using a tool (4) in the shape of a cone or truncated cone mounted for rotation on a spindle which is arranged at a defined angle to the workpiece axis (2) on which the workpiece (1) possessing the contour is mounted, **characterized in that** during machining the workpiece (1) is swept about at least one first sweep axis that differs from the workpiece axis (2).

3. Method according to Claim 1 or Claim 2, **characterized in that** the first sweep axis (8) is arranged parallel with the spindle axis (7) or workpiece axis (2) at a defined distance therefrom.

4. Method according to Claim 1 or Claim 2, **characterized in that** during machining the tool (4) or the workpiece (1) is additionally swept about a second sweep axis (10).

5. Method according to Claim 3, **characterized in that** the first sweep axis (9) is perpendicular to the spindle axis (7) or workpiece axis (2) and the second sweep axis (10) is perpendicular to the spindle axis (7) or workpiece axis (2) and to the first sweep axis (9).

6. Method according to any one of Claims 3 to 5, **characterized in that** the first sweep axis (9) extends in the region of the tool (4) or of the contour to be machined.

7. Method according to any one of Claims 3 to 6, **characterized in that** the second sweep axis (10) is arranged on the spindle axis (7) behind the first sweep axis (9) as viewed from the workpiece (1).

8. Method according to any one of Claims 1 to 7, **characterized in that** the tool (4) is displaceable along the spindle axis (7).

9. Method according to any one of Claims 1 to 8, **characterized in that** the angle of the spindle axis (7) with respect to the workpiece axis (2) is adjustable.

10. Method according to any one of Claims 1 to 9, **characterized in that** the headstock for mounting the spindle is slewable to enable the workpiece (1) to be engaged by another tool (4) mounted on the headstock.

11. Method according to any one of Claims 1 to 10, **characterized in that**, to obtain an oblique or convex contour, the tool (4) is provided with a corresponding surface line.

12. Method according to any one of Claims 1 to 11, **characterized in that** at least one grinding wheel is used as tool (4) for camshaft machining.

13. Device for carrying out the method according to any one of Claims 1 to 12, with a mounting for a workpiece and a headstock for mounting a tool (4), **characterized in that** during machining the headstock is pivotable about a first sweep axis (8, 9) that does not correspond to the spindle axis (7).

14. Device for carrying out the method according to any one of Claims 1 to 12, with a mounting for a workpiece and a headstock for mounting a tool (4), **characterized in that** during machining the workpiece is pivotable about a first sweep axis (8, 9) that does not correspond to the workpiece axis (2).

15. Device according to Claim 13 or Claim 14, **characterized in that** the first sweep axis (8) is arranged parallel with the spindle axis (7) or workpiece axis (2) at a defined distance therefrom.

16. Device according to any one of Claims 13 to 15, **characterized in that** a second sweep axis (10) about which the tool (4) or the workpiece (1) is pivotable during machining is provided.

17. Device according to Claim 16, **characterized in that** the first sweep axis (9) is provided perpendicularly to the spindle axis (7) or workpiece axis (2), and the second sweep axis (10), perpendicularly to the spindle axis (7) or workpiece axis (2) and to the first sweep axis (9).

18. Device according to Claim 16 or Claim 17, **characterized in that** the first sweep axis (9) is provided in the region of the tool (4) or of the contour to be machined.

19. Device according to any one of Claims 13 to 18, **characterized in that** the second sweep axis (10) is arranged on the spindle axis (7) behind the first sweep axis (9) as viewed from the workpiece (1).

20. Device according to any one of Claims 13 to 19, **characterized by** a linear mounting in which the tool (4) is displaceable along the spindle axis (7).

21. Device according to any one of Claims 13 to 20, **characterized by** a setting device for adjusting the angle of the spindle axis (7) with respect to the workpiece axis (2).

22. Device according to any one of Claims 13 to 21, **characterized in that** the headstock for mounting the spindle is slewable to enable the workpiece (1) to be engaged by another tool (4) mounted on the headstock.

23. Device according to Claim 22, **characterized in that** the headstock will accept a large-diameter tool (4) for roughing down and a small-diameter tool (4) for finishing.

24. Device according to any one of Claims 13 to 23, **characterized in that** the device is equippable with grinding wheels as tool (4) for camshaft grinding.

## Revendications

1. Procédé d'usinage par enlèvement de copeaux de contours en faux-rond par utilisation d'un outil (4) de forme conique ou tronconique qui est monté en rotation sur une broche, laquelle est disposée suivant un angle déterminé par rapport à l'axe (2) de la pièce et sur laquelle est montée la pièce (1) présentant le contour, **caractérisé en ce que** pendant l'usinage, on fait pivoter l'outil (4) autour d'au moins un premier axe de pivotement (8, 9) différent de l'axe (7) de la broche.

2. Procédé d'usinage par enlèvement de copeaux de contours en faux-rond par utilisation d'un outil (4) de forme conique ou tronconique qui est monté en rotation sur une broche, laquelle est disposée suivant un angle déterminé par rapport à l'axe (2) de la pièce et sur laquelle est montée la pièce (1) présentant le contour, **caractérisé en ce que** pendant l'usinage, on fait pivoter la pièce (1) autour d'au moins un premier axe de pivotement (8, 9) différent de l'axe (2) de la pièce.

3. Procédé selon la revendication 1 ou 2, **caractérisé en ce que** le premier axe de pivotement (8) est disposé parallèlement à l'axe (7) de la broche ou à l'axe (2) de la pièce à une distance déterminée de celui-ci.

4. Procédé selon la revendication 1 ou 2, **caractérisé en ce que** pendant l'usinage, l'outil (4) ou la pièce (1) est pivoté en outre autour d'un deuxième axe de pivotement (10).

5. Procédé selon la revendication 3, **caractérisé en ce que** le premier axe de pivotement (9) est perpendiculaire à l'axe (7) de la broche ou à l'axe (2) de la pièce et le deuxième axe de pivotement (10) est perpendiculaire à l'axe (7) de la broche ou à l'axe (2) de l'outil et au premier axe de pivotement (9).

6. Procédé selon l'une des revendications 3 à 5, **caractérisé en ce que** le premier axe de pivotement (9) s'étend dans la zone de l'outil (4) ou du contour à usiner.

7. Procédé selon l'une des revendications 3 à 6, **caractérisé en ce que** le deuxième axe de pivotement (10), vu depuis la pièce (1), est disposé sur l'axe (7) de la broche, derrière le premier axe de pivotement (9).

8. Procédé selon l'une des revendications 1 à 7, **caractérisé en ce que** l'outil (4) peut coulisser le long de l'axe (7) de la broche.

9. Procédé selon l'une des revendications 1 à 8, **caractérisé en ce que** l'angle de l'axe (7) de la broche peut être réglé par rapport à l'axe (2) de la pièce.

10. Procédé selon l'une des revendications 1 à 9, **caractérisé en ce que** la poupée porte-broche peut pivoter pour permettre l'engagement d'un autre outil (4), monté sur la poupée porte-broche, avec la pièce (1).

11. Procédé selon l'une des revendications 1 à 10, **caractérisé en ce que** pour obtenir un contour oblique ou bombé, l'outil (4) est pourvu d'une génératrice de ce type.

12. Procédé selon l'une des revendications 1 à 11, **caractérisé en ce que** pour usiner un arbre à came, on utilise au moins un disque de meulage comme outil (4).

13. Dispositif pour la mise en oeuvre du procédé selon l'une des revendications 1 à 12, comportant un support de pièce ainsi qu'une poupée porte-broche pour supporter un outil (4), **caractérisé en ce que** pendant l'usinage la poupée porte-broche peut pivoter autour d'un premier axe de pivotement (8, 9) qui ne correspond pas à l'axe (7) de la broche.

14. Dispositif pour la mise en oeuvre du procédé selon l'une des revendications 1 à 12, comportant un support de pièce ainsi qu'une poupée porte-broche pour supporter un outil (4), **caractérisé en ce que** pendant l'usinage la pièce (1) peut pivoter autour d'un premier axe de pivotement (8, 9) qui ne correspond pas à l'axe (7) de la pièce.

15. Dispositif selon la revendication 13 ou 14, **caractérisé en ce que** le premier axe de pivotement (8) est disposé parallèlement à l'axe (7) de la broche ou à l'axe (2) de la pièce à une distance déterminée de celui-ci.

16. Dispositif selon l'une des revendications 13 à 15, **caractérisé en ce qu'**il est prévu un deuxième axe de pivotement (10) autour duquel l'outil (4) ou la pièce (1) peut pivoter pendant l'usinage.

17. Dispositif selon la revendication 16, **caractérisé en ce que** le premier axe de pivotement (9) est prévu perpendiculairement à l'axe (7) de la broche ou à l'axe (2) de la pièce et le deuxième axe de pivotement (10) est prévu perpendiculaire à l'axe (7) de la broche ou à l'axe (2) de la pièce et au premier axe de pivotement.

18. Dispositif selon la revendication 16 ou 17, **caractérisé en ce que** le premier axe de pivotement (9) est prévu dans la zone de l'outil (4) ou du contour à usiner.

19. Dispositif selon l'une des revendications 13 à 18, **caractérisé en ce que** le deuxième axe de pivotement (10), vu depuis la pièce (1), est disposé sur l'axe (7) de la broche derrière le premier axe de pivotement (9).

20. Dispositif selon l'une des revendications 13 à 19, **caractérisé par** un support linéaire dans lequel l'outil (4) peut coulisser le long de l'axe (7) de la broche.

21. Dispositif selon l'une des revendications 13 à 20, **caractérisé par** un dispositif de réglage au moyen duquel on peut régler l'angle de l'axe (7) de la broche par rapport à l'axe (2) de l'outil.

22. Dispositif selon l'une des revendications 13 à 21, **caractérisé en ce que** la poupée porte-broche peut pivoter pour permettre l'engagement d'un autre outil (4), monté sur la poupée porte-broche, avec la pièce (1).

23. Dispositif selon la revendication 22, **caractérisé en ce que** la poupée porte-broche permet de recevoir un outil (4) de grand diamètre pour le pré-usinage et de recevoir un outil (4) de petit diamètre pour l'usinage de finition.

24. Dispositif selon l'une des revendications 13 à 23, **caractérisé en ce que** le dispositif de meulage d'arbres à came peut être équipé de disques de meulage servant d'outil (4).
